# EUROPEAN PATENT APPLICATION

(11) **EP 2 161 448 A1**
(43) Date of publication of application: **10.03.2010**
(21) Application number: 08015752.2
(22) Date of filing: 06.09.2008
(51) Int. Cl.: F04B 17/04, F04B 43/04, F04B 45/047, H02K 33/06, H02K 33/16, H02K 33/12, H01F 7/16

(54) **Motor-driven pump**

(71) Applicant: Braun GmbH, 61476 Kronberg (DE)
(72) Inventor: Ziegler, Frank, 60489 Frankfurt am Main (DE); Schober, Uwe, 61479 Glashütten-Schlossborn (DE); Kressmann, Frank, 65760 Eschborn (DE); Dal Bò, Paolo, 65843 Sulzbach (DE)

(57) **Abstract**

A motor-driven pump (1) is proposed that comprises a linear oscillating motor (100) that comprises a stator (110) having at least two legs and at least a stator coil (120) wound around one of the legs of the stator (110), an armature (140) comprising at least two permanent magnets (141, 142) mounted side-by-side with anti-parallel polarity to a back iron (143), and
an elastic coupling (130, 131) connecting the stator (110) and the armature (140) such that the permanent magnets (141, 142) face the ends (111, 112, 113) of the legs of the stator (110) and that a linear oscillatory movement of the armature (140) is allowed and it further comprises a pump arrangement (200) that comprises a membrane (210) that is mechanically coupled to the armature (140) so that the membrane (210) is actuated when the armature (140) is moved relatively to the stator (110), thereby affecting a pumping action of the pump arrangement (140). Such a motor-driven pump can be easily manufactured, is simple in structure, has only a few parts, is reliable and is essentially wear-less.

## Description

### FIELD OF THE INVENTION

The invention is concerned with motor-driven pumps in general and in particular with motor-driven pumps comprising a pump arrangement that has a membrane that is actuated to affect a pumping action of the pump arrangement.

### BACKGROUND OF THE INVENTION

Motor-driven pumps according to the opening paragraph are widely known and a variety of different specific motor-driven pump realizations are utilized for pumping applications. Still, there is the need for a reliable, long-lasting, and essentially wear-less motor-driven pump that can be realized in a miniaturized format while providing high pumping capability.

### SUMMARY OF THE INVENTION

It is a desire of the present invention to provide a motor-driven pump that fulfils needs as mentioned before.

Such a motor-driven pump is provided by the features of claim 1. Further embodiments are given by the dependent claims.

The motor-driven pump as proposed comprises a linear oscillating motor and a pump arrangement. The linear oscillating motor comprises a stator that has at least two legs (e.g. an U-shaped or an E-shaped stator) with at least a stator coil (the U-shaped stator has two stator coils wound around the legs and the E-shaped stator has one stator coil wound around the centre leg) and an armature that comprises at least two permanent magnets (with an U-shaped stator, three permanent magnets are required, while for an E-shaped stator two permanent magnets are sufficient) that are mounted to the armature in a side-by-side arrangement with respective opposing polarity. The armature and the stator are elastically coupled to each other so that a linear oscillating movement of the armature relatively to the stator is allowed. The armature is coupled to stator in such a way that the permanent magnets face the ends of the legs of the stator and the linear movement can occur in a line parallel to the ends of the stator legs. The pump arrangement comprises a membrane (or diaphragm) that is mechanically coupled to the armature such that a linear oscillating movement of the armature actuates the membrane and thereby affects a pumping action of the pump arrangement. In an embodiment, the pump arrangement has only a single membrane.

The motor-driven pump as proposed has an essentially wear-less motor as no gear parts are required, which makes the motor also very reliable. Due to the coupling of the armature to the stator, which positions and guides the armature movement, the motor can be realized very small. As the motor has a resonant frequency, excitation of the motor with a frequency at or close to the resonance frequency makes the motor-driven pump very energy efficient.

In an embodiment, the elastic coupling is realized by two leaf springs. Use of leaf springs specifically allows for a small sized motor realization.

In another embodiment, the motor-driven pump further comprises a motor supply control for controllably supplying energy to the stator coil.

In a further embodiment, the armature comprises an armature weight element that allows setting the resonance frequency of the linear vibratory (or oscillating) motor.

In one embodiment, the resonance frequency of the linear oscillating motor lies in a range between 50 Hz - 1000 Hz. In a refinement, the resonance frequency lies in a range between 100 Hz - 300 Hz or in another refinement in a range between 150 Hz - 250 Hz.

The invention is also concerned with an electric appliance such as a hair removal device, a toothbrush or a liquid dispenser (or vaporizer) that comprises the motor-driven pump as described.

### BRIEF DESCRIPTION OF THE DRAWINGS

The invention will be further elucidated by a detailed description of an embodiment and by reference to figures. In the figures
- Fig. 1: shows a schematic side view onto a motor-driven pump as proposed where the motor is in a rest or non-deflected position;
- Fig. 2: shows a schematic side view onto the motor-driven pump as shown in Fig. 1 but with the motor in a deflected position;
- Fig. 3: shows a perspective view onto the motor as shown in Figs. 1 and 2; and
- Fig. 4: is a schematic depiction of a liquid dispenser comprising a motor-driven pump as proposed.

### DETAILED DESCRIPTION OF THE INVENTION

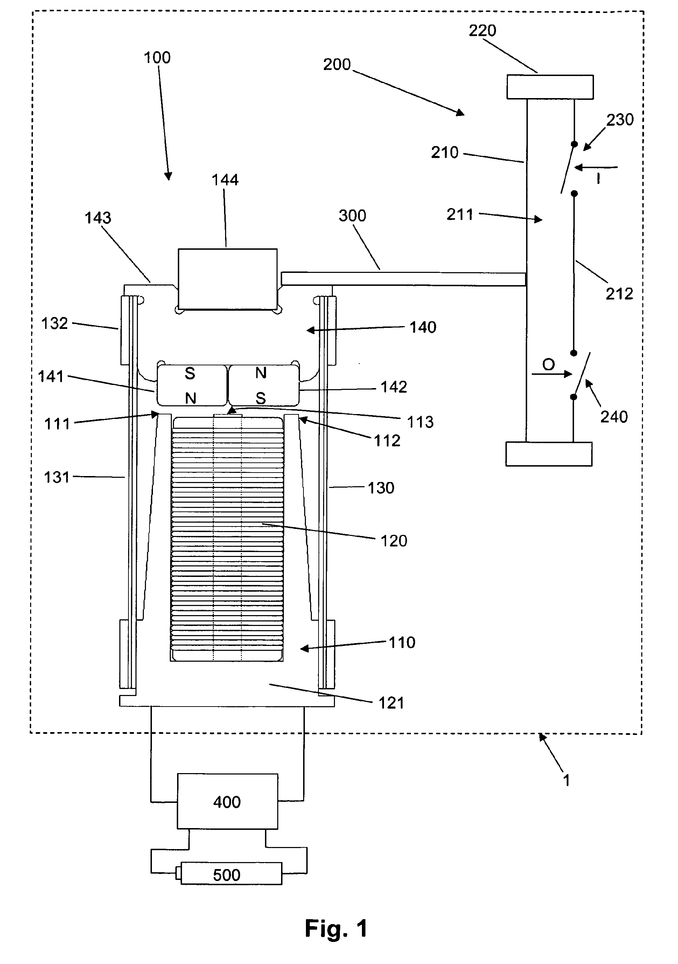

Fig. 1 is a schematic depiction of a motor-driven pump 1 according to an exemplary embodiment. The motor-driven pump 1 comprises a motor 100, a pump arrangement 200, and a connector 300 that connects the motor 100 and the pump arrangement 200. The motor 100 comprises an armature 140 and an E-shaped stator 110 having a stator coil 120 wound around the centre leg (indicated by dotted lines) of the iron core 121. The armature 140 comprises a back iron 143 to which two permanent magnets 141, 142 are mounted side-by-side with opposite polarity as is indicated by the north N and south S poles in Fig. 1. The armature 140 may also comprise an additional armature weight element 144, which can be used to set (or modify) the resonance frequency of the linear oscillating motor 100. The pump arrangement 200 comprises a membrane (or diaphragm) 210 and a rigid cover 212. The rigid cover 212 has an inlet 230, e.g. an inlet valve, and an outlet 240, e.g. an outlet valve. The membrane 210 and the cover 212 are fastened to a frame 220 such that a closed chamber 211 is formed. A connector 300 is on one side fixedly connected to the armature 140 of the motor 100 and on the other side connected to the membrane 210 such that by a linear movement of the armature 140 the connector 300 actuates the membrane 210, i.e. the connector 200 either pushes the membrane 210 into the chamber 211 when the armature 140 moves towards the pump arrangement 200 or pulls the membrane 210 outwards when the armature 140 moves away from the pump arrangement 200.

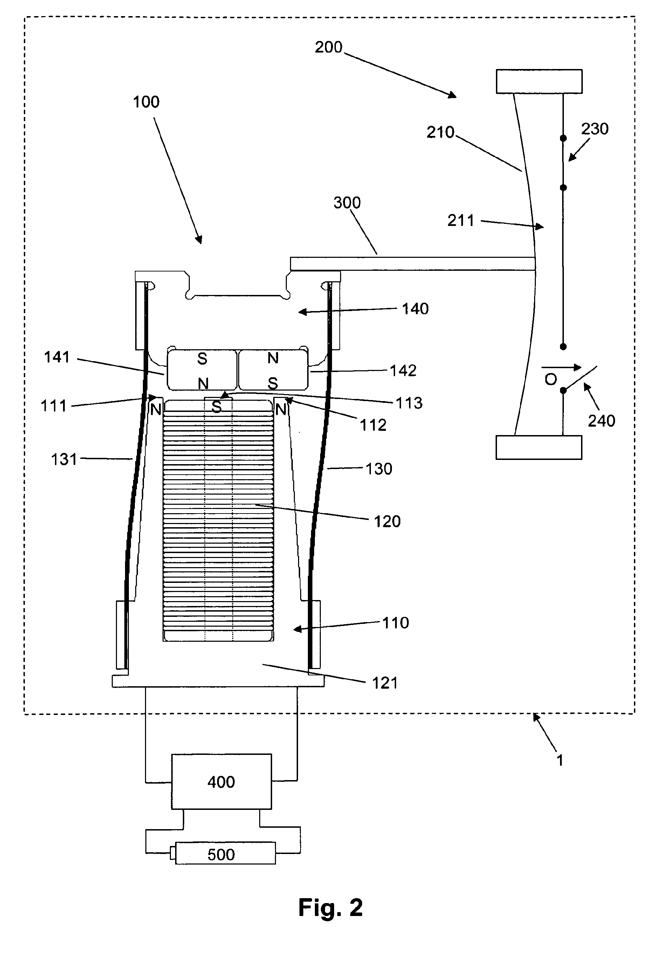

The armature 140 is elastically coupled to the stator 110 by an elastic coupling that is in the shown embodiment realized by two leaf springs 130 and 131 that are each fastened with one end to the stator 110 and with the other end to the armature 140. The fastening of the leaf springs 130, 131 could e.g. be accomplished by fastening elements 132 such as screws or by gluing the ends of the leaf springs to the armature 140 and the stator 110. The armature 140 and the stator 110 are coupled in such a way that the two permanent magnets 141, 142 face the ends of the legs of the E-shaped stator 110 while a small gap remains between the armature 140 and the stator 110. During operation, a motor control circuitry 400 controllably supplies energy from an energy supply 500 such as a battery or mains voltage to the stator coil 120. As will be explained with reference to Fig. 2, the motor 100 is a linear oscillating motor that is put into motion by providing an alternate current to the stator coil 120. The linear oscillating motor 100 has a resonance frequency that is essentially determined by the spring constant of the leaf springs and the weight of the armature 140, the latter being adaptable by the additional armature weight element 144. Hence, by providing an alternate current to the stator coil 120 at or close to the resonance frequency, the efficiency of the linear oscillating motor 100 is very high. The linear oscillating motor 100 is also essentially wear-less as the armature 140 and the stator 110 are arranged with a gap to each other and there is no frictional contact. Because of the use of the leaf springs 130, 131 the linear oscillating motor 100 can also be realized small sized. As the armature 140 is connected to the stator 110 by the elastic coupling 130, 131, a linear oscillator movement of the armature 140 relative to the stator 110 is allowed along a direction parallel to the line connecting the ends 111, 112, 113 of the legs of the stator 110. The armature 140 is thereby mounted and guided. In contrast to other realizations, where an armature 140 needs to be connected to two membranes such that the armature is mounted and guided by this connection, the motor 100 as proposed allows that the armature 140 is only connected to one membrane 210, which results in a very small installation size of the proposed motor-driven pump.

During operation, the pump arrangement 200 sucks in a gas or liquid provided in a cavity in front of the inlet 230 such that a gas or liquid stream I into the chamber 211 is generated and it pumps out the gas or liquid from the chamber 211 into a cavity in front of the outlet 240 such that a gas or liquid stream O is generated.

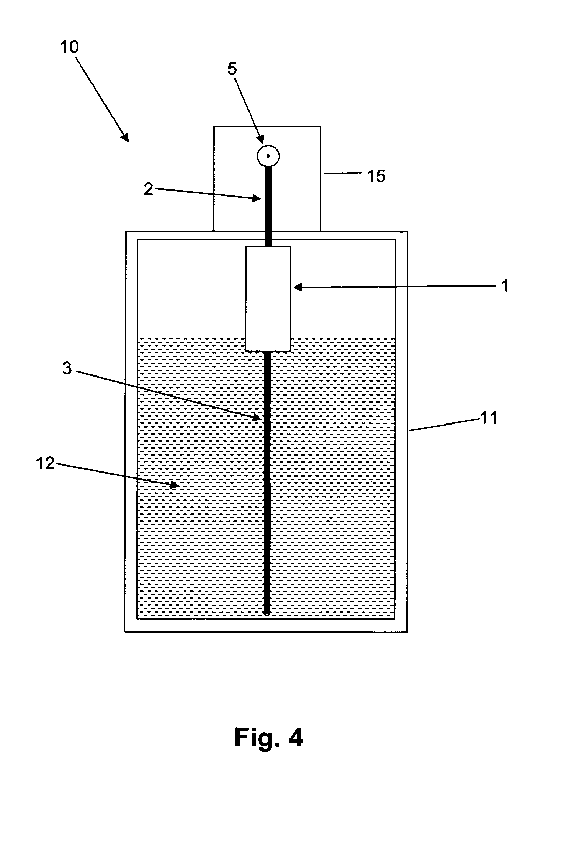

In one embodiment, the motor-driven pump 1 is provided with a rigid connection between stator 110 and frame 220 arranged for mounting into a device such as shown in Fig. 4. The motor-driven pump 1 may be provided with the motor supply control 400 and the energy source 500 included or the motor-driven pump 1 may have connectors provided for coupling to a motor supply control 400 and/or an energy source 500 or the motor driven pump 1 may be provided with a cavity for accommodating an energy source 500 such as a battery or coin cell, while the motor supply control 400 is included in the motor-driven pump 1. The pump arrangement 200 of the motor-driven pump 1 may be provided with coupling units for coupling e.g. pipes to the inlet and outlet, respectively.

In another, non-limiting embodiment, the stator is U-shaped and has two stator coils, each of which are being wound around one of the legs of the iron core of the U-shaped stator. An armature is elastically coupled to the stator (e.g. by realizing the elastic coupling by spring leafs), to which armature three permanent magnets are mounted side-by-side in respective anti-parallel polarity, which permanent magnets face the ends of the legs of the U-shaped stator.

The iron core of the stator and the back iron of the armature may be realized by laminating magnetic metal sheets as is generally known in the art.

Fig. 2 is a schematic depiction of the motor-driven pump as shown in Fig. 1 during operation in a stage at which the armature 140 is moved towards the pump arrangement 200 and the membrane 210 is bent into the chamber 211 of the pump arrangement 200. In order to achieve this stage during the linear oscillatory movement of the armature 140 with respect to the stator 110, the motor supply control 400 provides a current from the energy source 500 such that at the end 113 of the centre leg of the E-shaped stator 110 a magnetic south pole S is formed and magnetic north poles N are formed at the ends 111, 112 of the outer legs of the E-shaped stator 110. Due to this magnetic state, the permanent magnet 141 arranged on the left side of the armature 140 in Fig. 1 such that its north pole N faces the legs of the stator 110 is attracted by the magnetic south pole S formed at the end 113 of the centre leg of the E-shape stator and is repelled by the magnetic north pole N formed at the end 111 of the left outer leg of the E-shaped stator 110. At the same time, the permanent magnet 142 arranged on the right side of the armature 140 in Fig. 1 such that its south pole faces the ends of the legs of the stator 110 is attracted by the magnetic north pole N formed at the end 112 of the right outer leg of the E-shape stator and is repelled by the magnetic south pole S formed at the end 113 of the centre leg of the E-shaped stator 110. As the possible movement of the armature 140 with respect to the stator 110 is limited by the elastic coupling realized by the spring leafs 130, 131 to a linear movement of the armature 140 along a line that lies in the plane of the legs of the stator 110 parallel to the ends of the legs of the stator 110, the armature 140 is linearly moved towards the pump arrangement 200 and the connector 300 thereby pushes the membrane 210 into the chamber 211. Any gas or liquid that is present in the chamber 211 is thus pumped out through outlet 240, while inlet 230 stays closed. By reversing the current direction (which is controlled by the motor supply control 400), the magnetic poles formed at the ends of the legs of the E-shaped stator 110 reverse their polarity and the armature 140 is moved away from the pump arrangement 200 and pulls the membrane 210 out of the chamber 211. Thus, any gas or liquid present in the front of inlet 230 is sucked into chamber 211, while the outlet 240 stays closed. By repeatedly reversing the current direction supplied to the stator coil 120, a linear oscillating movement of the armature 140 is generated. As the linear oscillating motor represents a resonant system, the efficiency of the motor is optimal if the alternate current is provided at or close to the resonance frequency. The amplitude of the linear oscillating movement is controllable by the amount of energy supplied to the stator coil 120.

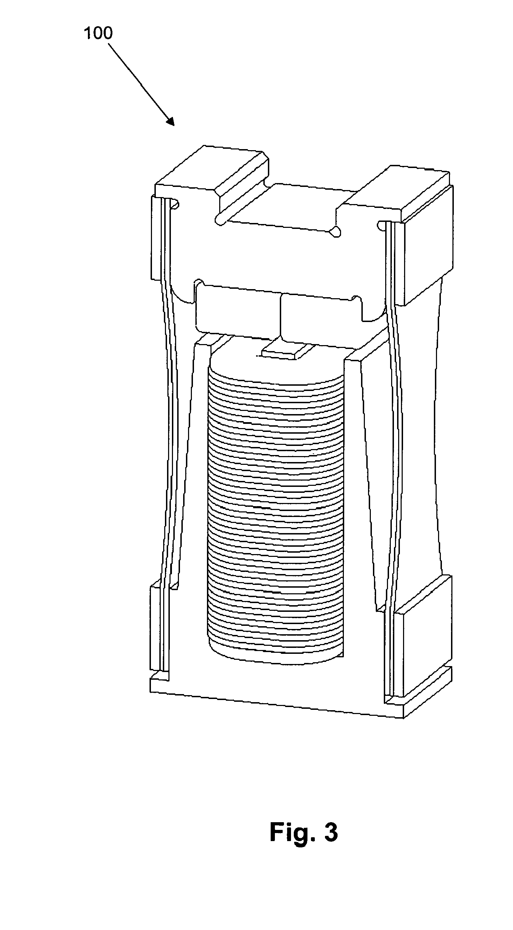

Fig. 3 is a schematic perspective view onto the linear oscillating motor 100 shown in Fig. 1 and Fig. 2.

Fig. 4 shows a schematic depiction of an exemplary device 10 that comprises a motor-driven pump 1 as proposed. The device 10 as shown is a liquid dispenser, e.g. a perfume spray that is arranged for automatically dispensing a liquid through a nozzle 5 such that a fine liquid mist is generated. The automatic dispensing procedure may be triggered through, e.g., pushing the spray head 15 as is known from manual sprays. The motor-driven pump 1 may then be activated for a certain period of time such as 3 seconds. In another embodiment, the start of the pumping action of the motor-driven pump 1 is started by a first push of the spray head 15 and is stopped by a second push of the spray head 15. The liquid dispenser 10 comprises a housing 11 in which a liquid 12 such as a perfume is stored. A suction pipe 3 is extending into the liquid 12, which suction pipe 3 is connected with the inlet 230 of the motor-driven pump 1 (Fig. 1 shows the inlet 230). A conveyor pipe 2 connects the outlet 240 of the motor-driven pump 1 with the nozzle 5. Motor supply control (reference numeral 400 in Fig. 1) and energy supply (reference numeral 500 in Fig. 1) are not shown but may be also arranged in the housing 11.

Instead of a liquid dispenser as shown in Fig. 4, the motor-driven pump 1 as proposed may be utilized in any arbitrary other electronic appliance in which a miniature pump is needed, e.g. a hair removal device (such as an electronic shaver or an epilating device) in which the motor-driven pump is, e.g., used to dispense a liquid mist onto the skin prior or after hair removal or a toothbrush or oral irrigator that may make use of the gas or liquid pumping capability of the proposed motor-driven pump.

In another non-limiting exemplary embodiment, a motor-driven pump 1 as proposed is realized as an air-pump having an overall size of 25·21·14 mm³ (or 7350 mm³), in which volume the linear oscillating motor with an E-shaped stator and two permanent magnets mounted in anti-parallel polarity at the armature and the diaphragm pump arrangement is provided. The exemplary pump has a flow rate of 0.8 liters/minute free flow and provides a maximal pressure of 120 mbar at a resonance frequency of the linear motor of 170 Hz. The power consumption of this exemplary device is 0.7 Watts.

The linear oscillatory motor proposed as actuator for the membrane of the pump arrangement has various advantages over other motors used so far in diaphragm pumps. The design of the proposed linear oscillatory motor is simple, requires only a few parts and allows for simple manufacturing. In combination, these points also result in a very low-cost motor. The motor has no gear parts and hence does essentially not suffer from any mechanical wear, which results in a very long life span of such a motor. Further, due to the wear-less design, the linear oscillatory motor is also very reliable.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. Motor-driven pump (1) comprising:
a linear oscillating motor (100) that comprises
a stator (110) having at least two legs and at least a stator coil (120) wound around one of the legs of the stator (110),
an armature (140) comprising at least two permanent magnets (141, 142) mounted side-by-side with anti-parallel polarity to a back iron (143), and
an elastic coupling (130, 131) connecting the stator (110) and the armature (140) such that the permanent magnets (141, 142) face the ends (111, 112, 113) of the legs of the stator (110) and that a linear oscillatory movement of the armature (140) is allowed; and
a pump arrangement (200) that comprises a membrane (210) that is mechanically coupled to the armature (140) so that the membrane (210) is actuated when the armature (140) is moved relatively to the stator (110), thereby affecting a pumping action of the pump arrangement (140).

2. Motor-driven pump according to claim 1, wherein the elastic coupling (130, 131) is realized by two leaf springs.

3. Motor-driven pump according to claim 1 that further comprises a motor supply control (400) for controllably supplying energy to the stator coil.

4. Motor-driven pump according to claim 1 that further comprises an armature weight element (144) mounted to the armature (140).

5. Motor-driven pump according to claim 1, wherein the stator (110) is E-shaped and the stator coil (120) is wound around the centre leg of the E-shaped stator and two of the permanent magnets (141, 142) are mounted to the armature (140).

6. Motor-driven pump according to claim 1, wherein the stator (110) is U-shaped and comprises two stator coils (120), each of which are wound around a leg of the U-shaped stator, respectively, and three of the permanent magnets (141, 142) are mounted to the armature (140).

7. Motor-driven pump according to claim 1, wherein the resonance frequency of the linear oscillating motor (100) lies in a range between 50 Hz - 1000 Hz.

8. Motor-driven pump according to claim 1, wherein the outer dimensions of the motor-driven pump (1) are not extending beyond 25 mm · 21 mm · 14 mm.

9. Electronic appliance (10) such as a hair removal device or a liquid dispenser comprising a motor-driven pump (1) according to one of claims 1 to 8.
